# EUROPEAN PATENT SPECIFICATION

(11) **EP 3 528 371 B1**
(45) Date of publication and mention of the grant of the patent: **11.05.2022**
(21) Application number: 18157345.2
(22) Date of filing: 19.02.2018
(51) Int. Cl.: H02K 5/02, H02K 9/22

(54) **HOUSING FOR AN ELECTRICAL MACHINE, AN ELECTRICAL MACHINE INCLUDING THE HOUSING, AND A METHOD FOR INCREASING THE COOLING OF THE ELECTRICAL MACHINE**
GEHÄUSE FÜR EINE ELEKTRISCHE MASCHINE, ELEKTRISCHE MASCHINE MIT DEM GEHÄUSE UND VERFAHREN ZUR ERHÖHUNG DER KÜHLUNG DER ELEKTRISCHEN MASCHINE
BOÎTIER POUR MACHINE ÉLECTRIQUE, MACHINE ÉLECTRIQUE COMPRENANT LE BOÎTIER ET PROCÉDÉ PERMETTANT D'AUGMENTER LE REFROIDISSEMENT DE LA MACHINE ÉLECTRIQUE

(43) Date of publication of application: 21.08.2019
(73) Proprietor: ABB Schweiz AG, 5400 Baden (CH)
(72) Inventor: THOLENCE, Frederic, 723 48 Västerås (SE); RÖNNBERG, Kristian, 723 40 Västerås (SE)
(74) Representative: Kransell & Wennborg KB

(56) References cited:
- EP-A2- 0 354 405
- EP-A2- 2 928 049
- DE-A1-102014 001 267

## Description

### Technical field

The present invention relates to a housing for an electrical machine. The invention further relates to an electrical machine including the housing, and a method for increasing the cooling of the electrical machine. The invention further relates to a use of the electrical machine.

### Background

Electrical machines produce heat as a by-product. When running a length of time, the heat can affect the efficiency and function of the machine. There are many ways to cool the machine during operation, such as water cooling, ventilation cooling, using a fan, and using cooling fins arranged on the motor for increased heat exchange with the surroundings. Combinations of cooling methods are also used. For example, conventional motors are often cooled using flat ribs on the surface of the housing of the motor and a fan housed in a fan shroud.

There are many industries where cleanliness is important and, thus, where it is important that the electrical machines are designed to avoid accumulation of dirt and to be easy to clean. In, for example, the food and beverage industry there are strict requirements for machines to be designed so that they avoid accumulation of dirt and are easy to clean, i.e. to achieve a strict hygienic design, to prevent micro bacterial growth. The motors are cleaned at least once a day. For electric motors in the food and beverage industry, motors with a polished stainless steel housing are often preferred because of the easiness to clean a smooth stainless steel surface and because the surface will not rust or give off flakes during cleaning. As a rule of thumb, a surface roughness below 0.8 µm is often required. However, for example, motors with stainless steel housings for the food & beverage industry, from powers of 2.2 kW, are currently cooled through forced convection by a shaft-mounted fan. The fan requires a fan cover and the cover usually collects dirt and is hard to clean. Such motors are Totally Enclosed, Fan-Cooled, TEFC, motors. Motors of lower power can be naturally cooled, i.e. passively cooled, since the surface of the stainless steel housing emits enough thermal energy to keep it cooled.

All of the above examples of cooling of machines collect dirt and affect the easiness to clean the electrical machines and there is a need for a way to cool electrical machines with a smooth stainless steel surface while still providing a hygienic design.

EP2928049A1 discloses a stainless steel housing for an electrical machine, wherein the interior surface is anodized black to obtain an emissivity greater than 0.9. Mainly concerned with radiative heat transfer, this disclosure addresses the problem of removing heat from internal components of the electric machine.

### Summary

It is an aim of the present invention to at least partly overcome the above problems, and to achieve cooling of electric motors that complies with the hygienic demands in the food & beverage industry.

According to an aspect of the disclosure, this aim is achieved by a housing for an electrical machine as defined in claim 1. The housing comprises an outer layer of stainless steel, the outer layer having an outer surface with an emissivity of more than 0.4. A polished stainless steel surface normally has an emissivity less than 0.2, and typically about 0.16. By treating the stainless steel surface in various ways, it is possible to increase the emissivity of the surface. The increased emissivity allows for effective emittance of energy as thermal radiation. In other words, the high emissivity allows for heat to radiate at an increased rate from the housing to the surroundings. Treating the surface of the housing so that the emissivity of the surface is more than 0.4 forced convection cooling is no longer necessary. By using high emissivity to increase the rate of emittance of thermal radiation, it is possible to cool the machine without any fan, fins or other cooling structures that will collect dirt and render the cleaning more difficult, and by that to keep a smooth stainless steel surface of the housing. Thus, the electrical machine will be easy to clean and less bulky than when using other cooling structures. The cooling solution is robust since it does not require an external structure to be added to the machine, reliable since it is passive and has no moving parts and is cost effective since it is passive and does not require maintenance.

At least a part of the housing is made of stainless steel. The housing can be made solely of stainless steel, or may partly include other materials.

According to the invention, the outer surface has a surface roughness less than 2 µm. As discussed in the background section, when cleanliness around the electrical machine is important, a smooth surface of the machine is preferable, where dirt does not stick and start micro bacterial growth. A surface with a roughness of less than 2 µm is a smooth surface. The term "surface roughness" means Ra which is the arithmetical mean deviation of the assessed profile according to ISO 4287.

According to some aspects, the outer surface has a surface roughness less than 0.8 µm. Depending on what industry the electrical machine is used in, the demand on surface roughness may vary. For the food and beverage industry it is often 0.8 µm.

A well-known way to increase the emissivity of a surface is to paint the surface with paint having high emissivity. However, this is not a suitable solution in the food & beverage industry since the paint might flake off due to the repeated cleaning, and the flakes will contaminate the food.

According to some aspects, the outer layer is treated by any of oxidizing and etching. Oxidizing and etching are treatments that affect the surface emissivity. Oxidized stainless steel has an emissivity of about 0.8 and etching roughens the surface which also increases emissivity. Note that the surface roughness should still be less than 2 µm and preferably less than 0.8 µm. An advantage using oxidation or etching, in comparison to painting, is that surface still stand repeated cleaning without any risk that flakes will flake off and contaminate the food.

According to some aspects, the outer layer comprises oxidized stainless steel. After oxidizing, the stainless steel outer layer will be oxidized.

According to some aspects, the outer layer comprises etched stainless steel. Again, etching affects the roughness of the surface and a rougher surface leads to higher emissivity. There is a trade-off between the demand on a smooth surface to facilitate the cleaning and the emissivity. Preferably, the etched surface of the housing has a surface roughness less than 2 µm.

According to some aspects, the emissivity is more than 0.6 and preferably more than 0.8. Both oxidizing and etching of the surface can give an emissivity of 0.6 and even 0.8. The higher the emissivity, the better the cooling of the electrical machine.

According to an aspect of the invention, the aim is achieved by a method as defined in claim 8 for increasing the cooling of an electrical machine having a housing comprising an outer layer of stainless steel.

The method comprises treating the outer layer so that the emissivity of an outer surface of the outer layer is more than 0.4. The advantages with the method are the same as for the housing as previously discussed.

As also previously discussed, according to some aspects, the treating of the outer layer comprises any of oxidizing and etching of the outer layer.

According to some aspects, the treating of the outer layer gives a surface roughness of less than 2 µm, and preferably of less than 0.8 µm.

According to an aspect of the invention, the aim is achieved by an electrical machine as defined in claim 11.

The electrical machine comprises a housing according to the invention, and the electrical machine is only passively cooled. In other words, there is no other cooling than the cooling by thermal radiation, which rate is increased on the housing by the increased emissivity, by air convection and by thermal conduction, for example, through the shaft. The machine is cooled by passive cooling and does not require any additional cooling structures. The electrical machine is fanless, i.e. it does not have any fan for cooling the machine. Passive cooling without an external structure, such as a fan, will make the machine easy to clean, which is preferable in clean environments where the machine needs to be easy to clean.

The electrical machine is, for example, a motor or a generator. With the housing of a machine is meant the encapsulation of the machine, which surrounds the machine and prevents dirt and moisture from leaking into the machine and contamination from leaking outside.

According to some aspects, the electrical machine is an electric motor with a nominal power of at least 0.75 kW, and preferably of at least 2.2 kW. Motors of 2.2 kW have previously always had a cooling system including fans, which affects how easy the motor is to clean. A 2.2 kW electric motor with cooling by thermal radiation from a surface with increased emissivity can be sufficiently cooled without other cooling arrangements. A motor of at least 0.75 with the disclosed cooling will also have more efficient cooling. If, for example, such a motor is used in a heat sensitive environment, effective cooling may be important.

According to an aspect of the disclosure, it comprises use of the electrical machine according to the invention in the food and beverage industry. Again, as described above, machines that are easily cleaned are highly desired in the food and beverage industry.

According to an aspect of the disclosure, it comprises use of the electrical machine according to the invention in industrial application requiring regular washdown.

### Brief description of the drawings

The invention will now be explained more closely by the description of different embodiments of the invention and with reference to the appended figures.
Fig. 1 shows an example of a surface roughness profile of a surface with the surface roughness indicated.
Fig. 2 shows an example of an electrical machine in the form of an electric motor with a smooth surface of stainless steel according to lean hygienic design practices.
Fig. 3 shows an example of a cross-section of a housing with an outer layer and an outer surface.
Fig. 4 shows a block diagram of a method for increasing the cooling of an electrical machine.

### Detailed description

Aspects of the present disclosure will be described more fully hereinafter with reference to the accompanying drawings. The device and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

Unless otherwise defined, all terms used herein have the same meaning as commonly understood by one of ordinary skill in the art to which this disclosure belongs.

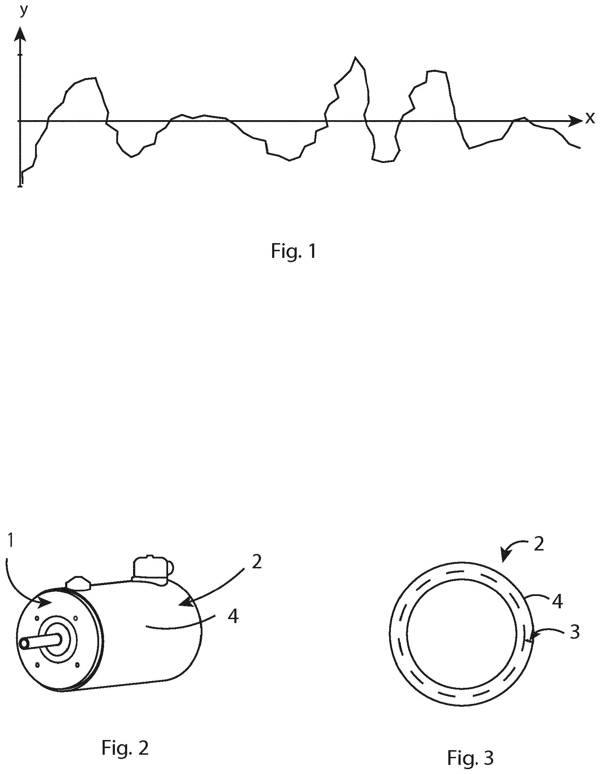

As defined in the summary, the term "surface roughness" means Ra which is the arithmetical mean deviation of the assessed profile according to ISO 4287. An example of a surface roughness profile is illustrated in figure 1, where the x axis represents the surface mean line and the y axis shows the vertical deviations.

The term "emissivity" is here used as the effectiveness of a surface in emitting energy as thermal radiation. Emissivity is the ratio of the thermal radiation from a surface to the radiation from an ideal black surface at the same temperature.

Figure 2 shows an example of an electrical machine 1, in this figure illustrated as an electric motor 1. The electric motor comprises a stainless steel housing 2. Figure 3 is a cross-section of the housing 2, showing an outer layer 3 and an outer surface 4.

The disclosure provides a housing 2 for an electrical machine 1, the housing 2 comprising an outer layer 3 of stainless steel, the outer layer 3 having an outer surface 4 with an emissivity of more than 0.4. Preferably, the outer layer covers most, or all, of the housing. For example, the housing may be cylindrical as shown in figures 2 and 3, and at least the envelope surface of the housing has such an outer layer 3. How much of the total outer surface area of the electrical machine housing that the outer surface 4 covers may depend on the implementation of the electrical machine. A low power machine and/or a machine that is not used continuously may need less area of increased emissivity than a high-power machine which is continuously running.

The high emissivity is to allow for effective emittance of energy as thermal radiation. In other words, the high emissivity allows for heat to radiate at an increased rate from the housing 2 to the surroundings. By using high emissivity to increase the rate of emittance of thermal radiation, it is possible to keep a smooth stainless steel surface of the housing 2. Thus, the electrical machine 1 will be easy to clean and less bulky than when using another cooling structure. The cooling solution is robust since it does not require an external structure to the machine, reliable since it is passive and has no moving parts and cost-effective since it is passive and does not require maintenance. With this solution, a naturally cooled fan-free electric machine for industries requiring high cleanability is provided.

At least the outer layer 3 of the electrical machine is of stainless steel. However, it can also be that the whole housing 2 is of stainless steel, or that the housing comprises mostly stainless steel. For the purpose of this disclosure, it is enough that the outer layer is of stainless steel, but that does not rule out that more of the housing can be made of stainless steel.

Polished stainless steel has an emissivity of about 0.16. Treating of the surface can be done so that the emissivity is increased to more than 0.4. The outer surface 4 is the external outer surface of the electrical machine as shown in figures 2 and 3.

The book "Multiphysics Simulation by Design for Electrical Machines, Power Electronics, and Drives" by Marius Rosu et al. discusses heat extraction through radiation in part 4.4. The book discloses that motor paint and fin dimensions can be chosen to improve the motor apparent emissivity.

In the present disclosure, the emissivity is increased without using a paint or fins. Paint is not desired to be used in a clean environment because of the risk of flaking with time and during cleaning. Fins easily collect dirt which is hard to remove.

Surface roughness has been defined above when discussing figure 1. The outer surface 4 of the housing has, according to some aspects, a surface roughness of less than 2 µm. As discussed in the background section, when cleanliness around the electrical machine 1 is important, a smooth surface of the machine is preferable where dirt does not stick and start micro bacterial growth. A surface with a roughness of less than 2 µm is a smooth surface which is easy to clean. According to some aspects, the surface roughness is less than 0.8 µm. Depending on what industry the electrical machine 1 is used in, the demand on surface roughness may vary. For the food and beverage industry it is often 0.8 µm. A rougher surface often has a higher emissivity than a smoother surface, therefore there is a trade-off between a low surface roughness and high emissivity. However, tests have shown that it is possible to reach an emissivity of over 0.8 with a surface roughness lower than 0.8 µm.

Treatment of the stainless steel outer layer can be done to increase the emissivity of stainless steel. According to some aspects, the outer layer 3 is treated with/by any of oxidizing and etching. Oxidizing and etching are treatments that affect the surface emissivity. Oxidized stainless steel has an emissivity of about 0.8 and etching roughens the surface which also increases emissivity. Note that the surface roughness should still be less than 2 µm and preferably less than 0.8 µm. Thus, by treating the outer layer the surface is affected such that the emissivity is increased to at least 0.4.

It is understood here that there are many ways to increase the emissivity of stainless steel. However, for food and beverage applications, oxide conversion coatings are the preferred technical solution compared to traditional paintings and coatings. Hot black oxide is a typical example by which a thin black iron oxide layer is produced. The process consists in dippinga cleaned stainless steel surface into a hot alkaline solution or in a salt bath at elevated temperature. The process results in a well adherent, thin, <1µm thick, black oxide layer at the surface of the stainless steel. According to some aspects, the outer layer 3 is less than 1µm thick. One other alternative that could sufficiently raise the emissivity of the stainless steel component is through oxidation in air. In that case, the final emissivity depends on the balance between temperature, time, oxygen activity and chemical composition of the material. It is showed in the Memorandum 1-20-59L from the National Aeronautics and Space Administrations, NASA, by William R. Wade, that oxidation of the AISI 347 at 880°C for more than 30 minutes in air would be sufficient to raise the surface emissivity above 0.6.

In etching or pickling process, a cleaned stainless steel surface is etched, typically via a chemical or electrochemical etching process by using an acid. The etching process preferentially attacks the defects, such as grain boundaries and some precipitates, much more aggressively than the base material. The etched grain boundaries form a network of grooves on the microscopic level which results in a dull matt uniform grey finish with increased emissivity at a macroscopic scale. The concentration, temperature and duration of the etching process should be adjusted to the base material composition in such a way that the process produces highest emissivity without significant increase in surface roughness.

It is possible to apply a coating layer on top of the stainless steel to increase the thermal radiation emissivity of the surface. The above-mentioned book discloses that, for example, black paint has an emissivity of 0.92. However, with a coating layer there is always the risk of flaking as previously discussed. Therefore, oxidizing or etching the stainless steel is done to increase the thermal radiation emissivity of the surface without adding any material that may come loose over time or during cleaning. According to findings from numerical modelling, the solution will work for test-bench conditions of 100% load, thermal equilibrium, ambient temperature around 297 K. At lower ambient temperatures, the efficacy of the solution will increase.

Thus, according to some aspects, the outer layer 3 comprises oxidized stainless steel and according to some aspects, the outer layer 3 comprises etched stainless steel. After oxidizing, the stainless steel outer layer 3 is oxidized and again, etching affects the roughness of the surface and a rougher surface leads to higher emissivity.

Depending on the machine duty cycle and load, the requirement for emissivity may vary. For example, for a small engine with little load, an emissivity of 0.4 may be sufficient to cool it without any external cooling. However, for a larger machine running for a long time/ continuously with high load, the requirement for emissivity will be higher to be able to cool it without external cooling. According to some aspects, the emissivity is more than 0.6 and preferably more than 0.8. Both oxidizing and etching of the surface can give an emissivity of 0.6 and even 0.8. The higher the emissivity, the better the cooling of the electrical machine 1.

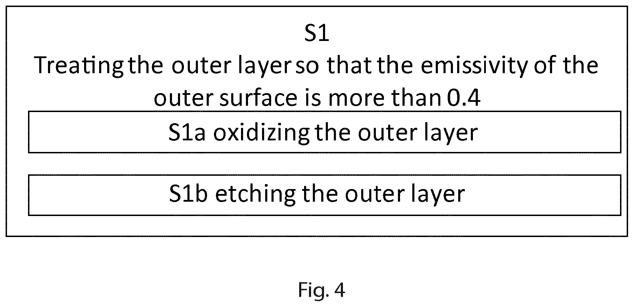

The disclosure also provides a method for increasing the cooling of an electrical machine 1. The method is illustrated as a block diagram in figure 4. As previously discussed the electrical machine 1 comprises an outer layer 3 of stainless steel, the outer layer 3 comprising an outer surface 4. The method comprises treating the outer layer 3 so that the emissivity of the outer surface 4 is more than 0.4. The advantages with the method are the same as for the housing 2 as previously discussed.

As also previously discussed, according to some aspects, the treating of the outer layer 3 comprises any of oxidizing S1a and etching S1b of the outer layer 3.

The treating of the outer layer 3 gives a surface roughness of less than 2 µm and preferably of less than 0.8 µm.

The disclosure also provides an electrical machine 1 with a housing 2 according to above, wherein the electrical machine 1 is only passively cooled. In other words, there is no other cooling than the cooling by thermal radiation, which rate is increased on the housing by the increased emissivity, by air convection and by thermal conduction, for example, through the shaft. Passive cooling without an external structure, such as a fan, will make the machine easy to clean, which is preferable in clean environments where the machine needs to be easy to clean.

The electrical machine 1 is, for example, an electric motor with a nominal power of at least 0.75 kW, and preferably of at least 2.0 kW and more preferably 2.2 kW. Motors of 2.2 kW have previously always had an external cooling system which affects how easy the motor is to clean, such as a fan. A 2.2 kW electric motor with cooling by thermal radiation from a surface with increased emissivity can be sufficiently cooled without other cooling systems. Analytical calculations have shown that a 2.2 kW electric motor with a stainless steel housing with an emissivity of 0.6 will have the same surface temperature as a 1.5 kW motor with a surface with 0.2 emissivity. A 1.5 kW motor with emissivity of 0.2 is today possible to run without an external cooling system but such a motor may be used in an environment where the additional cooling from the disclosed solution may be beneficial. If a motor is used in a warm environment, it is more important with effective cooling than in a cold environment, therefore, the solution of the disclosure may be beneficial for weaker motors than 2.2 kW. The electrical machine housing according to the disclosure is, for example, a motor housing, a robot housing, a gearbox housing and it may also be used as housing for electrical cabinets. Again, cleanliness is of outmost important in some industries, for example, the food and beverage industry, and according to an aspect of the disclosure, it comprises use of the electrical machine 1 according to above in the food and beverage industry. According to an aspect of the disclosure, it comprises use of the electrical machine according to above in industrial application requiring regular washdown. By industrial application requiring washdown is meant an industry that requires the electrical machine to be clean such that it is regularly washdowned, for example, washed daily.

Reference list:
1. Electrical machine
2. Housing
3. Outer layer
4. Outer surface

## Claims

1. A housing (2) for an electrical machine (1), the housing (2) comprising an outer layer (3) of stainless steel, **characterized in that** the outer layer (3) has an outer surface (4) with an emissivity of more than 0.4 and a surface roughness of less than 2 µm.

2. The housing (2) according to claim 1, the surface roughness being less than 0.8 µm.

3. The housing (2) according to any preceding claim, wherein the outer layer (3) is treated by any of oxidizing and etching.

4. The housing (2) according to any preceding claim, wherein the outer layer (3) comprises oxidized stainless steel.

5. The housing (2) according to any one of claims 1 to 3, wherein the outer layer (3) comprises etched stainless steel.

6. The housing (2) according to any preceding claim, wherein the emissivity is more than 0.6 and preferably more than 0.8.

7. A method for increasing the cooling of an electrical machine (1), wherein the electrical machine (1) has a housing (2) comprising an outer layer (3) of stainless steel, the outer layer (3) comprising an outer surface (4), **characterized by** treating (S1) the outer layer (3) so that the emissivity of the outer surface (4) is more than 0.4 and its surface roughness is less than 2 µm.

8. The method according to claim 7, wherein the treating of the outer layer (3) comprises any of oxidizing (S1a) and etching (S1b) the outer layer (3).

9. The method according to claim 7 or 8, wherein the treating of the outer layer (3) gives a surface roughness of less than 0.8 µm.

10. An electrical machine (1) with a housing (2) according to any of claims 1 to 6.

11. The electrical machine according to claim 10 wherein the electrical machine (1) is only passively cooled.

12. The electrical machine (1) according to claim 10 or 11, wherein the electrical machine (1) is an electric motor with a nominal power of at least 0.75 kW, and preferably of at least 2.2 kW.

13. Use of the electrical machine (1) according to claim 10, 11 or 12 in the food and beverage industry.

14. Use of the electrical machine (1) according to claim 10, 11 or 12 in an industrial application requiring regular washdown.

## Patentansprüche

1. Gehäuse (2) für eine elektrische Maschine (1), wobei das Gehäuse (2) eine Außenschicht (3) aus rostfreiem Stahl umfasst, **dadurch gekennzeichnet, dass** die Außenschicht (3) eine Außenoberfläche (4) mit einer Emissivität von mehr als 0,4 und einer Oberflächenrauheit von weniger als 2 µm aufweist.

2. Gehäuse (2) nach Anspruch 1, wobei die Oberflächenrauheit kleiner als 0,8 µm ist.

3. Gehäuse (2) nach einem der vorhergehenden Ansprüche, wobei die Außenschicht (3) durch jedwedes von Oxidieren und Ätzen behandelt wird.

4. Gehäuse (2) nach einem der vorhergehenden Ansprüche, wobei die Außenschicht (3) oxidierten rostfreien Stahl umfasst.

5. Gehäuse (2) nach einem der Ansprüche 1 bis 3, wobei die Außenschicht (3) geätzten rostfreien Stahl umfasst.

6. Gehäuse (2) nach einem der vorhergehenden Ansprüche, wobei die Emissivität größer als 0,6 und vorzugsweise größer als 0,8 ist.

7. Verfahren zur Erhöhung der Kühlung einer elektrischen Maschine (1), wobei die elektrische Maschine (1) ein Gehäuse (2) aufweist, das eine Außenschicht (3) aus rostfreiem Stahl umfasst, wobei die Außenschicht (3) eine Außenoberfläche (4) umfasst, **dadurch gekennzeichnet, dass** die Außenschicht (3) behandelt (S1) wird, so dass die Emissivität der Außenoberfläche (4) größer als 0,4 ist und deren Oberflächenrauheit kleiner als 2 µm ist.

8. Verfahren nach Anspruch 7, wobei das Behandeln der Außenschicht (3) jedwedes von Oxidieren (S1a) und Ätzen (S1b) der Außenschicht (3) umfasst.

9. Verfahren nach Anspruch 7 oder 8, wobei das Behandeln der Außenschicht (3) eine Oberflächenrauheit von weniger als 0,8 µm ergibt.

10. Elektrische Maschine (1) mit einem Gehäuse (2) nach einem der Ansprüche 1 bis 6.

11. Elektrische Maschine nach Anspruch 10, wobei die elektrische Maschine (1) nur passiv gekühlt wird.

12. Elektrische Maschine (1) nach Anspruch 10 oder 11, wobei die elektrische Maschine (1) ein Elektromotor mit einer Nennleistung von mindestens 0,75 kW und vorzugsweise mindestens 2,2 kW ist.

13. Verwendung der elektrischen Maschine (1) nach Anspruch 10, 11 oder 12 in der Lebensmittel- und Getränkeindustrie.

14. Verwendung der elektrischen Maschine (1) nach Anspruch 10, 11 oder 12 in einer industriellen Anwendung, die regelmäßiges Abspülen erfordert.

## Revendications

1. Logement (2) pour une machine électrique (1), le logement (2) comprenant une couche externe (3) en acier inoxydable, **caractérisé en ce que** la couche externe (3) a une surface externe (4) présentant une émissivité supérieure à 0,4 et une rugosité de surface inférieure à 2 µm.

2. Logement (2) selon la revendication 1, la rugosité de surface étant inférieure à 0,8 µm.

3. Logement (2) selon l'une quelconque des revendications précédentes, dans lequel la couche externe (3) est traitée par l'une quelconque parmi l'oxydation et la gravure.

4. Logement (2) selon l'une quelconque des revendications précédentes, dans lequel la couche externe (3) comprend de l'acier inoxydable oxydé.

5. Logement (2) selon l'une quelconque des revendications 1 à 3, dans lequel la couche externe (3) comprend de l'acier inoxydable gravé.

6. Logement (2) selon l'une quelconque des revendications précédentes, dans lequel l'émissivité est supérieure à 0,6 et de préférence supérieure à 0,8.

7. Procédé permettant d'augmenter le refroidissement d'une machine électrique (1), dans lequel la machine électrique (1) comporte un logement (2) comprenant une couche externe (3) en acier inoxydable, la couche externe (3) comprenant une surface externe (4), **caractérisé par** le traitement (S1) de la couche externe (3) de sorte que l'émissivité de la surface externe (4) soit supérieure à 0,4 et que sa rugosité de surface soit inférieure à 2 µm.

8. Procédé selon la revendication 7, dans lequel le traitement de la couche externe (3) comprend l'une quelconque parmi l'oxydation (S1a) et la gravure (S1b) de la couche externe (3).

9. Procédé selon la revendication 7 ou 8, dans lequel le traitement de la couche externe (3) donne une rugosité de surface inférieure à 0,8 µm.

10. Machine électrique (1) avec un logement (2) selon l'une quelconque des revendications 1 à 6.

11. Machine électrique selon la revendication 10, la machine électrique (1) étant refroidie uniquement de façon passive.

12. Machine électrique (1) selon la revendication 10 ou 11, la machine électrique (1) étant un moteur électrique ayant une puissance nominale d'au moins 0,75 kW, et de préférence d'au moins 2,2 kW.

13. Utilisation de la machine électrique (1) selon la revendication 10, 11 ou 12 dans l'industrie alimentaire et des boissons.

14. Utilisation de la machine électrique (1) selon la revendication 10, 11 ou 12 dans une application industrielle nécessitant un lavage régulier.
